# EUROPEAN PATENT APPLICATION

(11) **EP 3 012 179 A1**
(43) Date of publication of application: **27.04.2016**
(21) Application number: 15189891.3
(22) Date of filing: 15.10.2015
(51) Int. Cl.: B62K 3/00, B62K 11/00, B62M 1/10

(54) **SELF-LEVELING DEVICE FOR A STOPPED TWO-WHEELED VEHICLE**

(30) Priority: 20.10.2014 ES 201431362 U
(71) Applicant: Fino y Gomez, S.L., 46136 Valencia (ES)
(72) Inventor: FINO CARDENAS, Cesar, 46136 VALENCIA (ES)
(74) Representative: Del Valle Valiente, Sonia

(57) **Abstract**

Self-leveling device (1) of a stopped two-wheeled vehicle (2) which comprises: a functional flywheel (3) which is dimensionally suitable for compensating tilt torques in the vehicle (2), the axle (3a) of which being contained in the vertical longitudinal central plane (4) of said vehicle (2) or parallel to the same; a reversible drive motor (5) of said flywheel (3); a movement detector (6) of the vehicle (2), an inclination detector (7) of the vehicle (2); and an inclination processor (8) associated with the drive control (9) of the motor (5).

## Description

### OBJECT OF THE INVENTION

The present invention relates to a self-leveling device for a stopped two-wheeled vehicle, usable in any two-wheeled vehicle and more specifically motorcycles.

### BACKGROUND OF THE INVENTION

While driving around with a two-wheeled vehicle, such as a motorcycle, stopping at a traffic light or for any other reason means at least one foot has to be placed on the ground to laterally secure the vehicle and prevent the lateral falling thereof.

This can be cumbersome and even dangerous since the user often does not reach the ground comfortably, forcing the vehicle to be secured with only one leg. Furthermore, this involves a loss of security since the vehicle is slightly inclined and sometimes due to error, the inclination can be excessive and overcome the stabilizing force which the user carries out, causing the overturning thereof. Other times, especially with wet ground, it is the foot which can fail, often upon stepping carelessly on some road marking, with the same result.

In cold seasons and in determined types of motorcycles (scooters) capable of bearing a protective cover for the legs, removing these in order to secure the stopped scooter involves exposing the legs to the cold, with consequent discomfort or which the legs may trip over, which can similarly cause the overturning of the motorcycle.

In order to rectify this problem, some vehicles, especially scooters, are known, fitted with three wheels, two front wheels and one rear wheel, which provide three support points. The front wheels are mounted on a front axle which comprises two semi-axles with geometry adaptable to the inclinations required to improve the handling of the moving motorcycle, but with sufficient stability when stopped for maintaining the motorcycle vertical.

However, this configuration, being equipped with three wheels, is very costly and complex, on the one hand, and, on the other hand, there is the fundamental drawback that the motorcycle is frontally widened, reducing agility and easy handling in urban traffic.

### DESCRIPTION OF THE INVENTION

The self-leveling device for a stopped two-wheeled vehicle of the invention has a configuration which solves the drawbacks set out since it is capable of maintaining verticality of the stopped vehicle without increasing the frontal width thereof.

According to the invention, the device comprises: a functional flywheel which is dimensionally suitable for compensating tilt torques in the vehicle and the axle of which is contained in the vertical longitudinal central plane of said vehicle, or parallel to the same; a reversible drive motor of said flywheel; a movement detector of the vehicle; an inclination detector of the vehicle; and an inclination processor associated with the drive control of the motor.

The flywheel must be functional and dimensionally suitable for compensating tilt toques in the vehicle. This means that the mass and configuration thereof, as well as the expected velocity which can be reached should be sufficient for compensating reasonable unforced deviations of the verticality, which do not exceed the detection limits and actuating velocity of the device. The optimal and symmetrical functioning is produced if the axle of the flywheel is contained in the vertical longitudinal central plane of the vehicle, however, the invention also envisages that asymmetric mountings can be materialized with respect to said vertical longitudinal central plane, which would have similarly asymmetrical responses, which can be compensated with the operating regime applied to the flywheel by the motor.

### DESCRIPTION OF THE DRAWINGS

Figure 1 shows a detail of the frame of a motorcycle, wherein the installation of the device of the invention can be observed.
Figure 2 shows a frontal view of the motorcycle with the verticality achieved, the vertical matching the vertical longitudinal central plane of the vehicle.

Figures 3 and 4 show two views of the actuation of the flywheel for recovering the verticality of the motorcycle.

### PREFERRED EMBODIMENT OF THE INVENTION

The self-leveling device (1) of a stopped two-wheeled vehicle (2) of the invention comprises a functional flywheel (3) which is dimensionally suitable for compensating tilt torques in the vehicle (2), the axle (3a) of which being contained in the vertical longitudinal central plane (4) of the vehicle (2) or parallel to the same.

The device (1) also comprises a reversible drive motor (5) of said flywheel (3) as well as a movement detector (6) of the vehicle (2), an inclination detector (7) of the vehicle (2) and an inclination processor (8) associated with the drive control (9) of the motor (5).

The movement detector (6) preferably comprises a module of a global positioning system (GPS®) while the inclination detector (7) of the vehicle (2) preferably comprises a three-axle gyroscopic system and/or a magnetometer, not shown. A preferred embodiment incorporates these two elements with one function by means of two nested control loops.

In turn, the drive control (9) of the motor (5) comprises a processor and a reversible and variable power source to the motor (5), not shown.

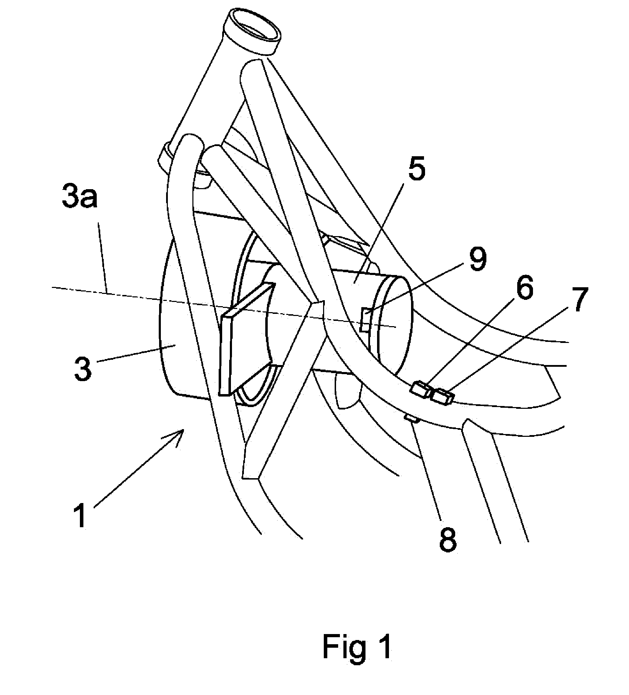

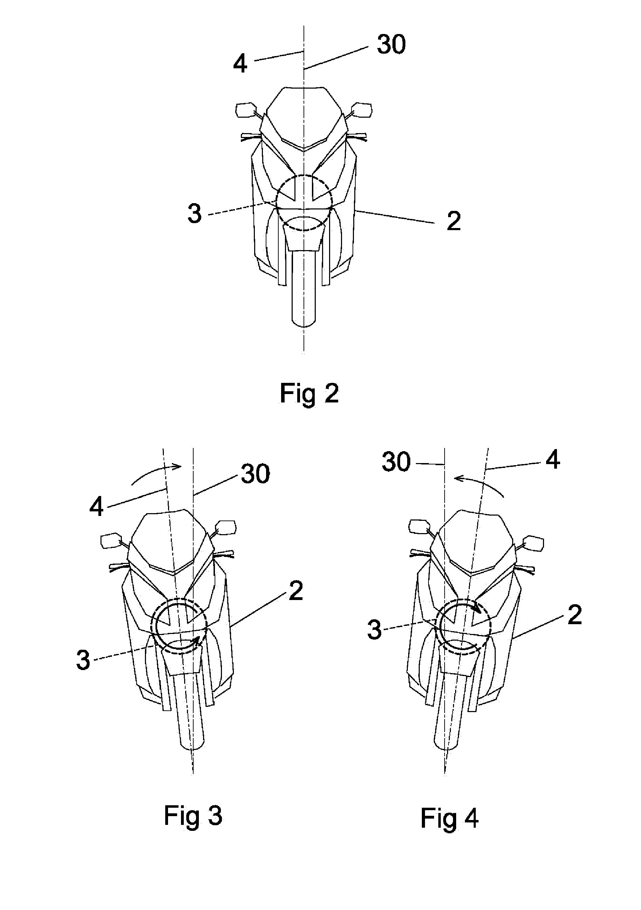

The device (1) is fixed to the chassis (2a) of the vehicle (2), as is seen in figure 1, at the optimal height for compensating the tilt torques due to the loss of verticality of the motorcycle as can be seen in figures 3 and 4.

The functioning is as follows: the device (1) detects whether the vehicle is stopped by means of the movement detector (6); then the inclination compensation mode is activated such that if it is detected by the inclination detector (7) that the vertical longitudinal central plane (4), perpendicular to the ground, is inclined by a determined magnitude with respect to the vertical (30), the inclination processor (8) determines the direction and velocity of rotation which the control (9) should output to the flywheel (3) to compensate the deviation, as can be seen in figures 3 and 4. Then the power supply of the motor (5), with the determined velocity parameters and rotation direction, commands by means of the power source for reversible and variable powering capacity to be provided for this reason. In figure 2, it can be observed that the motorcycle is vertical, therefore the positions of the plane (4) and of the vertical (30) match.

With the nature of the invention sufficiently described, it is indicated that the description of the same and of the preferred exemplary embodiment thereof should be interpreted in a non-limiting manner and that it covers the entirety of the possible embodiment variants which can be deduced from the content of the present specification and from the claims.

## Claims

1. A self-leveling device (1) of a stopped two-wheeled vehicle (2) **characterized in that** it comprises: a functional flywheel (3) which is dimensionally suitable for compensating tilt torques in the vehicle (2), the axle (3a) of which being contained in the vertical longitudinal central plane (4) of said vehicle (2) or parallel to the same; a reversible drive motor (5) of said flywheel (3); a movement detector (6) of the vehicle (2), an inclination detector (7) of the vehicle (2); and an inclination processor (8) associated with the drive control (9) of the motor (5).

2. The self-leveling device (1) of a stopped two-wheeled vehicle (2) according to claim 1, **characterized in that** the movement detector (6) comprises a module of a global positioning system.

3. The self-leveling device (1) of a stopped two-wheeled vehicle (2) according to any one of the preceding claims, **characterized in that** the inclination detector (7) of the vehicle (2) comprises a gyroscopic system and/or a magnetometer.

4. The self-leveling device (1) of a stopped two-wheeled vehicle (2) according to claim 3, **characterized in that** the gyroscopic system comprises three axles.

5. The self-leveling device (1) of a stopped two-wheeled vehicle (2) according to any one of the preceding claims, **characterized in that** the drive control (9) of the motor (5) comprises a processor and a reversible and variable power source to the motor (5).
